# DEMANDE DE BREVET EUROPEEN

(11) **EP 0 570 296 A1**
(43) Date de publication de la demande: **18.11.1993**
(21) Numéro de dépôt: 93401242.8
(22) Date de dépôt: 14.05.1993
(51) Int. Cl.: H02J 7/14, H02P 9/08, H02J 7/16

(54) **Circuit de commande d'un alternateur pour véhicule automobile**

(30) Priorité: 15.05.1992 FR 9205916
(71) Demandeur: REGIE NATIONALE DES USINES RENAULT S.A., F-92109 Boulogne Billancourt (FR)
(72) Inventeur: Valentin, Mikael, F-91290 Arpajon (FR); Baudoux, Jean-Paul, F-91120 Palaiseau (FR)

(57) **Abrégé**

Circuit de commande d'un alternateur (1) pour véhicule automobile muni d'un moteur thermique comportant une batterie (3) et un démarreur électrique (4), caractérisé en ce qu'il comporte des moyens (5) pour détecter la phase de démarrage dudit moteur et des moyens (6) pour commander alors une diminution du couple résistant de l'alternateur (1) exercé sur l'arbre moteur pendant une durée prédéterminée.

## Description

La présente invention concerne un circuit de commande d'un alternateur pour la charge d'une batterie de démarrage pour un véhicule automobile équipé d'un moteur à combustion interne, ce circuit de commande arrêtant l'alternateur dans des conditions particulières du véhicule et notamment au démarrage.

Un véhicule automobile équipé d'un moteur à combustion interne à allumage commandé ou à allumage par compression, doit être alimenté en énergie électrique pour pouvoir démarrer à tout moment et disposer d'une quantité suffisante de courant pour faire fonctionner les différents récepteurs électriques du véhicule (allumage, éclairage, ventilateur de refroidissement moteur, etc.). Pour ce faire on équipe classiquement le véhicule d'une batterie d'accumulateurs électro-chimiques, cette batterie étant rechargée en permanence lors du fonctionnement du moteur grâce à une génératrice électrique ou alternateur entraîné par la rotation de l'arbre moteur.

Le lancement du moteur s'effectue classiquement avec un démarreur électrique. La qualité du lancement dépend bien évidement des qualités du démarreur mais également de l'énergie délivrée par la batterie ainsi que du couple résistant dû aux différents frottements du moteur. L'énergie délivrée par la batterie est à même de connaître des chutes importantes dans des conditions extrêmes d'utilisation du véhicule telles que par exemple par grands froids. Il est donc particulièrement important pour assurer correctement le démarrage du moteur, même dans des conditions extrêmes d'utilisation, de diminuer le couple résistant du moteur.

Dans les modes de réalisation connus et rappelés ci-dessus, l'alternateur est entraîné et délivre un courant de charge à la batterie dès la mise en rotation du vilebrequin. Or le fonctionnement de l'alternateur prélève une puissance mécanique sur l'arbre moteur qui peut s'avérer particulièrement préjudiciable au lancement du moteur.

Le but de l'invention est donc de pallier aux inconvénients rappelés ci-dessus grâce à un circuit de commande de l'alternateur de conception particulièrement simple et peu onéreuse. Ce circuit permettant de réduire sensiblement le couple résistant de l'alternateur et donc du moteur lors du lancement de ce dernier par le démarreur.

Le circuit de commande selon l'invention concerne la commande d'un alternateur pour véhicule automobile muni d'un moteur thermique et comportant une batterie d'accumulateurs et un démarreur électrique.

Selon une caractéristique de l'invention, le circuit de commande comporte des moyens pour détecter la phase de démarrage du moteur et des moyens pour commander alors une diminution du couple résistant de l'alternateur exercé sur l'arbre moteur pendant une durée prédéterminée.

Selon un mode de réalisation où l'alternateur comporte des électro-aimants d'excitation, les moyens pour commander une diminution du couple résistant sont aptes à couper sélectivement le courant d'excitation desdits électro-aimants.

Selon une autre caractéristique de l'invention, la durée prédéterminée pendant laquelle le couple résistant de l'alternateur est diminué correspond sensiblement à la durée d'utilisation du démarreur.

Selon un mode de réalisation dans lequel l'alternateur comporte un enroulement d'excitation disposé dans le rotor coopérant avec un enroulement correspondant logé dans le stator, l'invention est caractérisée en ce que les moyens pour commander une diminution du couple résistant de l'alternateur comprennent un contacteur disposé dans le circuit d'alimentation de l'enroulement d'excitation, le contacteur étant piloté à partir desdits moyens de détection pour couper l'alimentation électrique dudit enroulement d'excitation.

Selon un mode de réalisation de l'invention, le contacteur est formé par un relais piloté électriquement.

Selon une autre caractéristique de l'invention, les moyens pour détecter la phase de démarrage sont directement activés par le courant électrique alimentant le démarreur.

Selon un mode de réalisation de l'invention, les moyens pour détecter la phase de démarrage comprennent un relais, ce relais étant activé par le passage d'un courant dans le circuit d'alimentation du démarreur.

On comprendra mieux les buts, aspects et avantages de la présente invention, d'après la description donnée ci-après d'un mode de réalisation de l'invention, donné à titre d'exemple non limitatif, en se référant au dessin annexé, dans lequel :

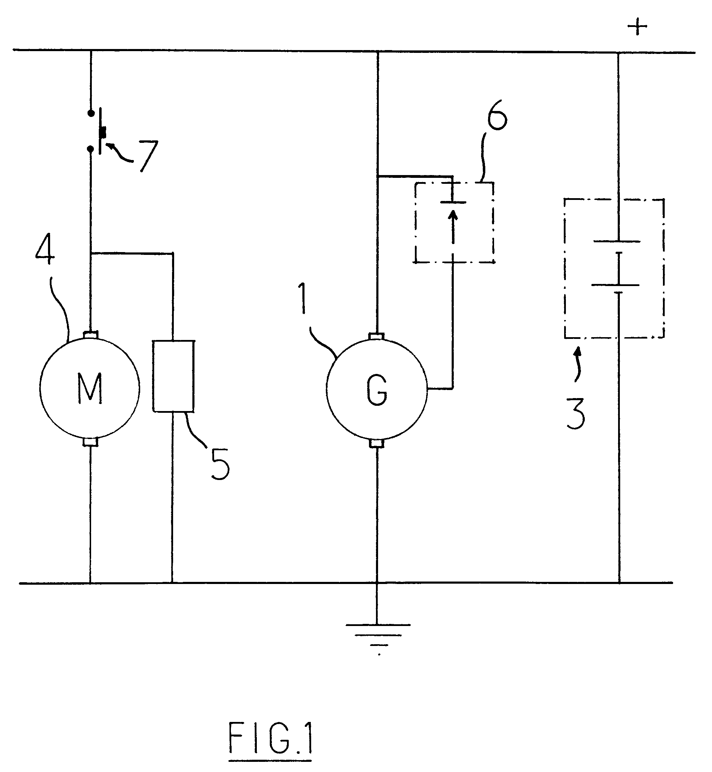

la figure 1 est une vue schématique de l'invention.

Conformément à la figure, seules les parties constitutives nécessaires à la compréhension de l'invention ont été représentées.

Le moteur à combustion interne destiné à équiper un véhicule automobile, incapable de démarrer par ses propres moyens, est muni classiquement d'un démarreur 4 pour en effectuer le lancement. Le démarreur 4 est constitué classiquement par un moteur électrique à courant continu, alimenté par une batterie d'accumulateurs électrochimiques 3, dite de démarrage. Le circuit d'alimentation du démarreur est équipé d'un relais de commande 7 actionné par la clef de contact pour assurer le passage du courant lorsque cette dernière est maintenue tournée.

Pour compenser la consommation du démarreur et des autres dispositifs électriques auxiliaires consommateurs de courant connectés à la batterie 3, le moteur entraîne classiquement un générateur électrique ou alternateur 1 apte à produire pendant les plages de fonctionnement du moteur un courant de charge à destination de la batterie d'accumulateurs 3.

Cet alternateur 1 comprend essentiellement un rotor, entraîné à partir de l'arbre moteur et portant des électro-aimants constitués par un ou plusieurs enroulements d'excitation, et un stator dans lequel est logé un enroulement triphasé ; le courant alternatif produit dans l'enroulement triphasé étant ensuite transformé en courant continu dans un circuit redresseur avant d'alimenter la batterie 3. Le courant électrique traversant l'enroulement d'excitation porté par le rotor est produit par la batterie 3, cette dernière étant directement reliée à l'enroulement par un circuit d'alimentation spécifique.

Suivant l'invention l'alternateur 1 est muni d'un circuit de commande spécifique destiné à couper l'excitation de l'alternateur 1 pendant la phase d'actionnement du démarreur 4. Pour ce faire le circuit d'alimentation du démarreur 4 est équipé d'un relais 5, ce relais 5 pilotant un contacteur 6 commandant le circuit d'alimentation de l'enroulement d'excitation rotorique.

Conformément à ce qui précède le fonctionnement du circuit de commande selon l'invention est alors le suivant. Lors de la mise en oeuvre du démarreur 4, par actionnement de la clé de contact, le passage du courant dans le circuit d'alimentation du démarreur 4 provoque le déclenchement du relais 5 ce qui a pour effet d'engendrer l'ouverture du contacteur 6 et donc l'ouverture du circuit d'alimentation de l'enroulement d'excitation de l'alternateur 1. L'alternateur 1 est donc déconnecté électriquement et n'oppose plus alors que le frottement du rotor sur ces paliers comme seule résistance à l'entraînement.

A la coupure de l'alimentation du démarreur 4, consécutivement au lâcher de la clé de contact ou s'il y a une temporisation à la fin de cette dernière, le relais 5 est désactivé, ce qui provoque la fermeture du contacteur 6 après éventuellement une temporisation, cette dernière pouvant être variable en fonction des conditions de démarrage. La fermeture du contacteur 6 entraîne donc la fermeture du circuit d'excitation. Le courant d'excitation traverse alors l'enroulement rotorique, ce qui, couplé à la rotation de ce dernier, provoque l'apparition de forces électromagnétiques. Les forces électromagnétiques ainsi produites génèrent alors un courant dans l'enroulement triphasé statorique et un couple résistant sur l'arbre moteur entraînant le rotor.

La déconnexion de l'alternateur 1 pendant la phase de démarrage, permet de diminuer la résistance à l'entraînement du moteur et donc d'en faciliter le lancement. La diminution de l'énergie nécessaire au lancement du moteur à pour conséquence de permettre le démarrage du moteur dans des conditions extrêmes de fonctionnement : batterie faiblement chargée, grands froids, etc. De plus la déconnexion de l'alternateur 1 ne durant que quelques secondes n'est absolument pas préjudiciable à la charge de la batterie.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi, suivant un mode de réalisation, le relais 5 et le contacteur 6 sont réalisés par un ensemble relais du type KT : contact à l'ouverture, retardé à la désexcitation du relais.

## Revendications

**[1]** Circuit de commande d'un alternateur (1) à électro-aimants pour véhicule automobile muni d'un moteur thermique comportant une batterie (3) et un démarreur électrique (4), caractérisé en ce qu'il comporte des moyens (5) pour détecter la phase de démarrage dudit moteur et des moyens (6) pour commander la coupure du courant d'excitation desdits électro-aimants, ladite période de coupure correspondant sensiblement à la période d'utilisation du démarreur (4).

**[2]** Circuit de commande d'un alternateur (1) selon la revendication 1, ledit alternateur (1) comportant un enroulement d'excitation disposé dans le rotor coopérant avec un enroulement correspondant logé le stator, caractérisé en ce que les moyens pour commander une diminution du couple résistant de l'alternateur (1) comprennent un contacteur (6) disposé dans le circuit d'alimentation de l'enroulement d'excitation, ledit contacteur (6) étant piloté à partir desdits moyens de détection (5) pour couper l'alimentation électrique dudit enroulement d'excitation.

**[3]** Circuit de commande d'un alternateur (1) selon la revendication 2, caractérisé en ce que ledit contacteur (6) est formé par un relais piloté électriquement.

**[4]** Circuit de commande d'un alternateur (1) selon l'une quelconque des revendications 1 à 3, caractérisé en ce que les moyens (5) pour détecter la phase de démarrage sont directement activés par le courant électrique alimentant le démarreur (4).

**[5]** Circuit de commande d'un alternateur 1 (1) selon la revendication 4, caractérisé en ce que les moyens pour détecter la phase de démarrage comprennent un relais (5), ledit relais (5) étant activé par le passage d'un courant dans le circuit d'alimentation du démarreur (4).
